Europäisches Patentamt

**European Patent Office**

**Office européen des brevets**

(19)

(11) Numéro de publication : **0 194 911**
**B1**

(12)

# FASCICULE DE BREVET EUROPÉEN

(45) Date de publication du fascicule du brevet :
**09.11.88**

(21) Numéro de dépôt : **86400358.7**

(22) Date de dépôt : **20.02.86**

(51) Int. Cl.⁴ : **G 01 P   3/48, G 01 D   5/245**

(54) **Dispositif de mesure de déplacement à roue codée.**

(30) Priorité : **20.02.85 FR 8502451**

(43) Date de publication de la demande :
**17.09.86 Bulletin 86/38**

(45) Mention de la délivrance du brevet :
**09.11.88 Bulletin 88/45**

(84) Etats contractants désignés :
**BE DE GB**

(56) Documents cités :
**FR-A- 2 112 298**
**GB-A- 1 007 271**
**GB-A- 2 024 433**

(73) Titulaire : **MATRA TRANSPORT**
**2, rue Auguste Comte**
**F-92173 Vanves Cedex (FR)**

(72) Inventeur : **Tousch, Roland**
**8, rue du Clos Sourdry**
**F-91570 Bievres (FR)**

(74) Mandataire : **Fort, Jacques et al**
**CABINET PLASSERAUD 84, rue d'Amsterdam**
**F-75009 Paris (FR)**

Jouve, 18, rue St-Denis, 75001 Paris, France

## Description

L'invention a pour objet un dispositif de mesure de déplacement, notamment en rotation autour d'un axe, du type comportant un organe tel qu'une roue entraînée dans la rotation et munie de repères codés régulièrement répartis autour de l'axe et au moins un capteur placé sur le trajet de circulation des repères. Un tel dispositif permet de déterminer la distance parcourue par un mobile en liant mécaniquement la roue de mesure à une roue du véhicule, ainsi qu'à la vitesse et l'accélération en mesurant le temps mis pour effectuer le déplacement.

Des dispositifs connus de ce type comportent une roue en forme de disque ou de cylindre en matériau à forte perméabilité magnétique, munie d'une denture qui circule devant le capteur. Cette solution présente l'inconvénient de fournir un signal électrique binaire dont les niveaux sont souvent insuffisamment séparés pour permettre la mesure dans de bonnes conditions.

L'invention vise notamment à fournir un dispositif de mesure de déplacement du type ci-dessus défini répondant mieux que ceux antérieurement connus aux exigences de la pratique et permettant en particulier d'obtenir un niveau élevé de signal de détection.

Dans ce but, l'invention propose un dispositif dans lequel les repères représentant deux chiffres binaires sont constitués l'un par un trou traversant la roue, constituée en matériau conducteur de l'électricité, l'autre par un trou relié au bord de la roue le plus proche par une fente étroite, et le capteur (ou chaque capteur) comporte deux bobines placées face à face, chacune d'un côté de la roue, et associées à des moyens de détection de leur inductance mutuelle.

On utilisera en général deux bobines à air alignées, dont l'une est associée à un circuit d'excitation et l'autre à un circuit de comparaison de l'amplitude du signal de sortie de la bobine avec le signal d'excitation.

Lorsqu'on souhaite mesurer simplement l'amplitude du déplacement ou la vitesse, il suffit de faire apparaître dans la roue une suite régulière de 0 et de 1. Lorsque, au contraire, on veut identifier la position de la roue, les repères doivent constituer un code binaire non cyclique, mémorisé dans un circuit de traitement associé au capteur, une séquence de huit bits suffisant pour repérer 256 positions, ce qui est souvent largement suffisant.

L'effet de la présence d'un trou simple entre les deux bobines d'un capteur est équivalent à celui qu'aurait une spire en court-circuit ajoutée au secondaire du transformateur que constituent les deux bobines. L'énergie rayonnée par la bobine d'émission, qui reçoit le signal d'excitation, est alors entièrement absorbée par la spire, de sorte que la tension et le courant dans la bobine de réception sont pratiquement annulés. L'effet d'un trou ouvert est le même que celui d'un condensateur reliant les deux points chauds des bobines.

Ce trou relié par une fente au bord de la roue augmente sensiblement le niveau du signal de réception, qui devient bien supérieur au couplage des deux bobines à air en l'absence de la roue.

Le système n'utilisant aucun circuit résonnant ou accordé, il peut fonctionner dans une plage de température très large, et l'électronique de commande peut sans difficulté être éloignée du capteur, ce qui permet d'utiliser le dispositif dans des cas où l'environnement de la roue est sévère.

L'invention vise également à fournir un dispositif assurant la sécurité de la mesure, en permettant un contrôle simple de la validité de cette dernière.

En d'autres termes, elle vise à fournir un dispositif comportant deux systèmes indépendants et de nature différente, fournissant des indications dont la cohérence peut être vérifiée à chaque mesure. Souvent les conditions ambiantes (température par exemple) sont telles qu'une mesure optique n'est pas possible. L'invention surmonte la difficulté en proposant un dispositif qui comprend, en plus de la roue codée présentant un code binaire non cyclique à N repères, une roue-horloge à N dents associée à au moins un détecteur fournissant des impulsions à la cadence du passage des dents, ainsi qu'un circuit de traitement comportant une mémoire dans laquelle est enregistrée la séquence constituant le code non cyclique, ce circuit étant prévu pour vérifier, à chaque impulsion fournie par le détecteur, que la séquence portée par la roue codée est conforme à celle préalablement enregistrée.

La roue-horloge peut notamment être constituée par une couronne en matériau présentant une perméabilité magnétique élevée à haute fréquence, munie de la denture, le détecteur ayant des moyens à carcasse magnétique présentant, en regard des dents, des pôles décalés d'un demi-pas et supportant des bobines de mesure montées de façon que la réluctance du circuit magnétique d'une bobine augmente lorsque l'autre diminue.

Bien que cette constitution de roue-horloge soit particulièrement favorable (et soit d'ailleurs utilisable indépendamment de la roue codée mentionnée plus haut), elle peut être remplacée par d'autres types pour garantir le caractère sécuritaire de la mesure.

L'invention sera mieux comprise à la lecture de la description qui suit d'un dispositif qui en constitue un mode particulier d'exécution, donné à titre d'exemple non limitatif. La description se réfère aux dessins qui l'accompagnent, dans lesquels :

la figure 1 est un schéma de principe montrant les roues d'un dispositif suivant l'invention et un détecteur associé à la roue-horloge ;

la figure 2 est un schéma synoptique du capteur et de l'électronique associée à la roue codée ;

la figure 3 est un développement en plan montrant une constitution possible d'un circuit de traitement associé au capteur de la roue-horloge.

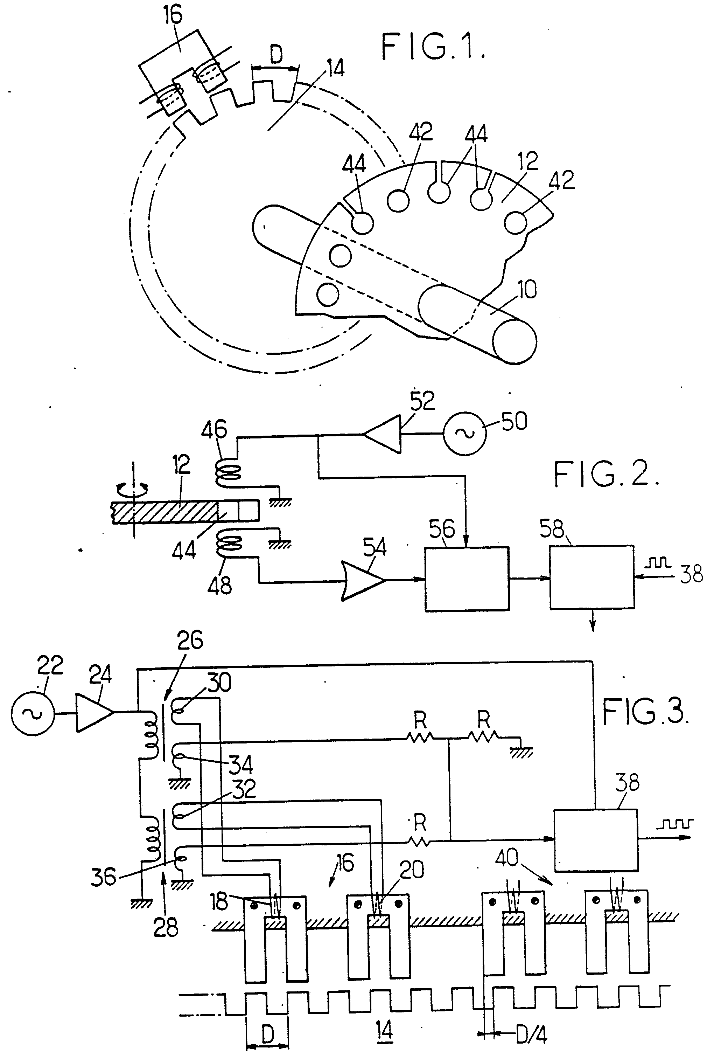

Le dispositif montré en figure 1, permettant de déterminer le déplacement en rotation d'un arbre 10, comporte une roue codée 12 et une roue-horloge 14 calées sur l'arbre. La roue-horloge 14 est constituée par un disque constitué, au moins dans sa partie circonférentielle, en matériau à forte perméabilité magnétique à haute fréquence. A la périphérie est taillée une denture régulière de pas D. Il n'est pas indispensable que la roue soit en forme de disque. Elle peut aussi bien être en forme de cylindre ou même de tronc de cône.

A la roue est associé au moins un détecteur 16. On connaît de nombreux types de détecteurs utilisables. Mais la plupart exigent une comparaison de signal avec un seuil, ce qui les rend très sensibles aux parasites. Au surplus beaucoup tolèrent mal les variations de fréquence et d'amplitude du signal d'excitation du détecteur. Le dispositif suivant l'invention qui sera maintenant décrit utilise un principe tout à fait différent, basé sur une détection de changement du déphasage entre signal d'excitation (prix comme référence) et signal détecté. Ce signal détecté pourra être constitué par la différence des tensions prélevées aux bornes de deux bobines appartenant à un même capteur.

Le détecteur 16 montré à titre d'exemple en Figures 1 et 3 comporte deux carcasses magnétiques, avantageusement du même matériau que la roue, présentant chacune deux pièces polaires dont le développement circonférentiel est sensiblement égal à celui d'une dent écartées d'un pas (ou d'un nombre entier de pas). Ainsi, les deux pôles sont sensiblement face à une dent. Les deux carcasses sont décalées d'un nombre entier de pas, plus un demi-pas et elles portent des bobines respectives 18 et 20. On voit que, lorsque la roue 14 est en mouvement, la réluctance du circuit magnétique comprenant la première carcasse et « vue » par la bobine 18 augmente lorsqu'elle diminue pour la bobine 20 portée par l'autre carcasse, et réciproquement. Il existe une position géométrique où les inductances sont égales. La tension aux bornes de chacune des bobines 18 et 20 est déterminée par le sens de variation de la réluctance. En effectuant la somme algébrique des tensions développées aux bornes des bobines 18 et 20 du même capteur 16, la phase s'inverse brusquement lorsqu'on passe d'un côté à l'autre de la position d'équilibre. Cette inversion de phase est facilement détectée par comparaison entre le signal d'excitation et le signal obtenu par somme algébrique. Il faut remarquer que les bobines représentent un organe sommateur commode mais pourraient cependant être remplacées par un amplificateur différentiel flottant.

Cette détection de phase peut notamment être réalisée à l'aide d'un circuit du genre montré en Figure 3. Ce circuit comporte un oscillateur haute fréquence 22 fournissant une porteuse (travaillant habituellement dans un domaine compris entre 40 kHz et 1 MHz) qui attaque, par l'intermédiaire d'un amplificateur 24, les bobinages primaires, placés en série, de deux transformateurs de couplage 26 et 28. Chacun des transformateurs de couplage 26 et 28 comporte un secondaire 30 ou 32 d'attaque d'une bobine respective 18 ou 20 et un secondaire 34 ou 36 de sortie de signal. On voit que les bobines 18 et 20 constituent un diviseur inductif et que la tension de sortie se répartit proportionnellement aux inductances de ces bobines, inductances liées aux réluctances des circuits magnétiques. Un circuit sommateur algébrique constitué de résistances R permet de faire la somme algébrique des signaux fournis par les secondaires 34 et 36 et de l'appliquer à un comparateur-démodulateur 38 qui reçoit également un signal de référence provenant de l'amplificateur 24. On obtient ainsi, à la sortie du comparateur-démodulateur, des créneaux dont chaque front correspond à une position d'équilibre des réluctances des bobines 18 et 20.

On voit que ce système est insensible aux variations d'amplitude ou de fréquence qui peuvent provenir de l'oscillateur d'excitation ou d'un guidage mécanique imparfait de la roue : l'inversion de phase intervient toujours pour la même position de la roue.

Un second détecteur 40, décalé de D/4 du premier, peut être prévu pour permettre de déterminer le sens de déplacement de la roue 14. D'autres détecteurs encore, décalés entre eux d'une fraction entière du pas dentaire D, peuvent être prévus pour obtenir un plus grand nombre de points de mesure par tour de roue, par utilisation d'un montage du genre Vernier.

La roue codée 12 est constituée d'un disque (pouvant être remplacé par un cylindre) mince en matériau non magnétique bon conducteur de l'électricité, tel que le cuivre ou l'aluminium. Les repères codés en binaire sont constitués par des trous de deux types différents. Les trous 42 sont de simples perforations circulaires : on supposera qu'elles correspondent à des zéros.

Les autres trous 44 comportent des perforations identiques aux précédentes, mais reliées au bord de la roue par une fente étroite. On supposera qu'elles indiquent des « uns ». Après perforation le disque peut être enrobé d'un matériau isolant obturant les trous, afin qu'il présente une surface lisse.

Les trous 42 et 44 sont répartis régulièrement sur un cercle au même pas angulaire D que les dents de la roue 14.

Le capteur associé à la roue 12 comporte deux bobines 46 et 48 démunies de noyaux magnétiques, placées en regard l'une de l'autre chacune d'un côté du disque, en un emplacement tel que les trous circulent devant elles. La détection est basée sur la radiation du couplage mutuel entre les bobines 46 et 48.

En effet, l'effet de la présence d'une perforation circulaire entre les bobines 46 et 48 est équivalente à celui d'une spire en court-circuit ajoutée au secondaire du transformateur que forment les deux bobines à air. La présence d'une perforation débouchant à la périphérie du disque a un effet équivalent à celui d'une capacité reliant les deux points chauds des bobines 46 et 48. Le couplage est alors supérieur à celui que donnent les bobines à air en l'absence du disque perforé. Pour tirer tout l'avantage possible de cette disposition, la fente doit avoir une largeur dont l'ordre de grandeur est du dixième de celui du trou. Au surplus, la distance entre trous, et entre chaque trou et le bord du disque, ne doit pas être sensiblement supérieure au diamètre du trou (ou à ses dimensions si ce trou n'est pas exactement circulaire).

Le circuit de détection compté peut notamment être celui schématisé en figure 2. Ce circuit comprend un oscillateur 50 qui attaque, par l'intermédiaire d'un amplificateur 52, la bobine émettrice 46. La bobine réceptrice 48 est reliée, par l'intermédiaire d'un amplificateur 54, à un circuit de détection et de mise en forme 56 qui reçoit également un signal de référence provenant de l'amplificateur 52.

Dans ce cas, lorsqu'une perforation 42 se trouve entre les bobines, l'énergie rayonnée par la bobine émettrice 46 est absorbée par l'effet de spire en court-circuit : le courant qui traverse la bobine de réception 48 devient pratiquement nul. Lorsque, par contre, une perforation débouchante 44 se trouve entre les bobines, le niveau du signal de réception fourni par la bobine 48 est supérieur à celui qu'elle donnerait en l'absence du disque 12.

Par un dimensionnement approprié des bobines 46 et 48, de leur écartement et de la forme des trous, on peut obtenir, aux bornes de la bobine réceptrice 48, une variation de tension supérieure à 30 dB suivant que les bobines sont en regard d'un trou 42 ou 44.

La détection peut se faire de façon classique par comparaison de l'amplitude du signal de sortie avec celle du signal d'excitation.

Pour assurer une grande sécurité à la mesure, le dispositif comporte de plus un calculateur 58. Dans la mémoire du calculateur 58 est enregistrée la séquence binaire représentée par les trous 42 et 44. Les impulsions fournies par le détecteur 16 sont appliquées au calculateur pour provoquer une lecture de l'information fournie par la bobine 48 à chaque passage devant une dent. Si une opération de calage a été effectuée initialement, pour déterminer la position angulaire de la roue 12, il suffit de comparer, à chaque nouvelle impulsion fournie par le circuit 38, le code mémorisé dans le calculateur 58 et le code lu sur la roue codée 12. Lorsque les informations coïncident, la probabilité pour que le système fonctionne correctement est très élevée. En effet, la défaillance de l'un du capteur ou du détecteur détruit la séquence normale et permet de constater la panne du système. Quant à la panne simultanée du capteur et du détecteur, elle peut être décelée par envoi d'une séquence de test dès que la roue-horloge n'envoie plus d'impulsions, après écoulement d'une temporisation.

L'invention est susceptible de nombreuses variantes de réalisation. En particulier, il n'est pas indispensable que les trous 42 et 44 soient circulaires : on peut notamment leur donner des formes se rapprochant du cercle, voire même une forme de rectangle, bien que la forme circulaire soit avantageuse du point de vue électrique. Par ailleurs, elle est directement transposable à la mesure de déplacement ou de position d'un organe mobile en translation.

**Revendications**

1. Dispositif de mesure de déplacement, notamment en rotation autour d'un axe, comportant une roue (12) entraînée dans la rotation et munie de repères codés régulièrement répartis autour de l'axe et au moins un capteur placé sur le trajet de circulation des repères, caractérisé en ce que les repères représentant deux chiffres binaires sont constitués l'un par un trou (42) traversant la roue, constituée en matériau conducteur de l'électricité, l'autre par un trou (44) relié au bord de la roue le plus proche par une fente étroite, le capteur comportant deux bobines (46, 48) placées face à face, chacune d'un côté de la roue, et associées à des moyens de détection de leur inductance mutuelle.

2. Dispositif selon la revendication 1, caractérisé en ce que les deux bobines sont des bobines à air alignées, dont l'une est associée à un circuit d'excitation à haute fréquence (50) et l'autre à un circuit (56) de comparaison du signal de sortie de la bobine avec le signal d'excitation.

3. Dispositif selon la revendication 1 ou 2, caractérisé en ce que les repères sont constitués par une séquence régulière de 0 et 1.

4. Dispositif selon la revendication 1 ou 2, caractérisé en ce que les repères constituent un code binaire non cyclique mémorisé dans un circuit de traitement (58) associé au capteur.

5. Dispositif selon l'une quelconque des revendications précédentes, caractérisé en ce qu'il comprend, en plus de la roue codée, une roue-horloge (14) ayant un nombre de dents identique au nombre des repères, associée à au moins un détecteur (16) fournissant des impulsions à la cadence du passage des dents.

6. Dispositif selon la revendication 5, caractérisé en ce que la roue-horloge (14) est constituée par une couronne en matériau présentant une perméabilité magnétique élevée à haute fréquence, munie des dents, le détecteur (16) ayant des moyens à carcasse magnétique présentant, en regard des dents, des pôles décalés d'un demi-pas et supportant des bobines de mesure (18, 20) montées de façon que la réluctance du circuit magnétique d'une bobine augmente lorsque l'autre diminue.

7. Dispositif selon la revendication 6, caractérisé en ce que le détecteur comprend deux carcasses dont chacune présente deux pôles simultanément en regard de deux dents, carcasses écartées d'un nombre impair de demi-pas et portant les bobines de mesure, et un circuit de sommation algébrique des signaux fournis par les bobines de mesure lorsqu'elles sont excitées par un même signal haute fréquence.

8. Dispositif selon la revendication 6 ou 7, caractérisé en ce qu'il comporte un circuit de traitement (58) ayant une mémoire dans laquelle est enregistrée la séquence constituant un code binaire non cyclique porté par la roue codée, ce circuit (58) étant prévu pour vérifier, à chaque impulsion fournie par le détecteur (16), que la séquence portée par la roue codée est conforme à celle préalablement enregistrée.

**Claims**

1. Device for measurement of motion, particularly of rotational motion about an axis, comprising a wheel (12) driven into rotation and provided with coded indices regularly distributed about the axis and at least one sensor located on the path of the indices, characterized in that the indices represent two binary digits, one of them consists of a hole (42) through the wheel of electricity conducting material and the other of them consists of a hole (44) connected to the closer wheel edge by a narrow slit, the sensor having two mutually confronting coils each located on one side of the wheel and operatively associated with means for detecting their mutual inductance.

2. Device according to claim 1, characterized in that the two coils are mutually aligned air coils, one of which is associated with a high frequency energizing circuit (50) and the other of which is associated with a circuit for comparing the output signal of the coil with the energizing signal.

3. Device according to claim 1 or 2, characterized in that the indices constitute a uniform sequence of zeroes and ones.

4. Device according to claim 1 or 2, characterized in that the indices define a non-cyclic binary code stored in a processing circuit associated with the sensor.

5. Device according to any one of the preceding claims, characterized in that it comprises, in addition to the coded wheel, a clock wheel (14) having teeth equal in number to the indices and associated with at least one detector (16) generating pulses at the rate of the passage of the teeth.

6. Device according to claim 5, characterized in that the clock wheel (14) consists of a ring of a material having a high magnetic permeability at high frequencies, provided with the teeth, the detector (16) having magnetic core means formed with poles confronting the teeth and separated by half the angular spacing of the teeth and carrying measurement coils (18, 20) so arranged that the reluctance of the magnetic circuit of one coil increases when the other decreases.

7. Device according to claim 6, characterized in that the detector has two cores each presenting two poles which simultaneously confront two teeth, said cores being spaced by an odd number of half said spacing and carrying the measurement coils and a circuit for algebric summation of the signals generated by the measurement coils when they are energized by a same high-frequency signal.

8. Device according to claim 6 or 7, characterized in that it comprises a processing circuit (58) having a memory in which the sequence constituting a non-cyclic binary code carried by the coded wheel is stored, said circuit (58) being arranged for verifying, upon occurrence of each pulse generated by the detector (16), that the sequence carried by the coded wheel is identical to the previously stored sequence.

**Patentansprüche**

1. Vorrichtung zur Messung einer Verschiebung, insbesondere in Drehung um eine Achse, mit einem Rad (12), welches in der Drehbewegung mitgenommen wird und mit gleichmäßig um die Achse verteilten kodierten Markierungen versehen ist, und mit wenigstens einem auf der Umlaufbahn der Markierungen angeordneten Sensor, dadurch gekennzeichnet, daß die zwei binäre Zahlen darstellenden Markierungen von einem Loch (42) quer durch das Rad aus einem elektrisch leitfähigen Material und einem anderen Loch (44) gebildet sind, welches mit dem Rand des Rades am nächsten durch einen schmalen Spalt verbunden ist, wobei der Sensor zwei Spulen (46, 48) aufweist, welche sich gegenüberliegend beidseitig des Rades angeordnet und mit Mitteln zur Anzeige ihrer gegenseitigen Induktivität verbunden sind.

2. Vorrichtung nach Anspruch 1, dadurch gekennzeichnet, daß die beiden Spulen gleichgerichtete Luftspulen sind, von denen die eine mit einem Erregerstromkreis mit hoher Frequenz (50) und die andere mit einer Schaltung (56) zum Vergleich des Ausgangssignals der Spule mit dem Erregungssignal verbunden ist.

3. Vorrichtung nach Anspruch 1 oder 2, dadurch gekennzeichnet, daß die Markierungen aus einer regelmäßigen Folge von 0 und 1 gebildet sind.

4. Vorrichtung nach Anspruch 1 oder 2, dadurch gekennzeichnet, daß die Markierungen aus einem nicht zyklischen binären Code gebildet sind, welcher in einem mit dem Sensor verbundenen Verarbeitungsschaltkreis (58) gespeichert ist.

5. Vorrichtung nach Anspruch 1 oder einem der folgenden, dadurch gekennzeichnet, daß diese neben dem kodierten Rad ein Uhrrad (14) mit einer identischen Anzahl an Zähnen und Markierungen aufweist, welches mit wenigstens einem Detektor (16) verbunden ist, welcher Impulse im Takt des Passierens der Zähne liefert.

6. Vorrichtung nach Anspruch 5, dadurch gekennzeichnet, daß das Uhrrad (14) von einem Kranz mit Zähnen aus einem Material gebildet ist, welches eine bei hoher Frequenz vergrößerte magnetische Permeabilität aufweist, wobei der Detektor (16) Mittel mit einem Magnetgestell umfaßt, welches den Zähnen gegenüberstehende, um einen Halbschritt verschobene Pole aufweist und Meßspulen (18, 20) trägt, welche derart angeordnet sind, daß die Reluktanz des magnetischen Schaltkreises der einen Spule zunimmt, bis die der anderen halbiert ist.

7. Vorrichtung nach Anspruch 6, dadurch gekennzeichnet, daß der Detektor zwei Magnetgestelle aufweist, von denen jedes zwei gleichzeitig zwei Zähnen gegenüberstehende Pole aufweist, wobei die Magnetgestelle von einer ungleichen Zahl an Halbschritten entfernt sind und die Meßspulen tragen, und eine algebraische Summationsschaltung mit Signalen aufweist, welche durch die Meßspulen geliefert werden, bis sie durch ein gleiches Signal hoher Frequenz angesprochen werden.

8. Vorrichtung nach Anspruch 6 oder 7, dadurch gekennzeichnet, daß diese eine Verarbeitungsschaltung (58) mit einem Speicher aufweist, in welchem eine Folge gespeichert ist, welche einen binären, nicht zyklischen von dem kodierten Rad getragenen Code aufweist, wobei die Schaltung (58) dazu vorgesehen ist, zu gewährleisten, daß mit jedem von dem Detektor (16) gelieferten Impuls die auf dem kodierten Rad gespeicherte Folge mit der zuvor gespeicherten übereinstimmt.

0 194 911

FIG.1.

FIG.2.

FIG.3.